# EUROPEAN PATENT APPLICATION

(11) **EP 4 844 747 A1**
(43) Date of publication of application: **25.11.2026**
(21) Application number: 25177583.9
(22) Date of filing: 20.05.2025
(51) Int. Cl.: G10L 15/22, G10L 15/16, G10L 15/183, G10L 15/30

(54) **APPARATUS AND METHOD FOR GENERATING CONTROL DATA FOR A DEVICE TO BE CONTROLLED FOR OPERATIONAL ACTIVITIES**

(71) Applicant: Banjo Robotics Srl, 20065 Inzago (MI) (IT)
(72) Inventor: BELLINO, Massimiliano, 20065 Inzago (MI) (IT)
(74) Representative: Penza, Giancarlo

(57) **Abstract**

Equipment (20) for generating control data (ck_data) of a device to be controlled for operational activities, wherein the equipment (20) comprises a wearable device (2), adaptable to a hand of a user, and a docking station (3) couplable to the wearable device (2). The wearable device (2) is configured to: acquire audio data (D1) representative of audio commands, wherein each audio data (D1) comprises a plurality of input data (dati_in_i), and transmit them to the docking station (3). The docking station (3) comprises a primary processing unit (200) configured to: receive the audio data (D1) acquired from the wearable device (2); generate at least the control data (ck_data) by an automatic speech recognition (ASR) system based on a recurrent neural network (RNN), from the received audio data (D1).

## Description

### FIELD OF APPLICATION

The present invention relates to an equipment for generating control data of a device to be controlled for operational activities.

The invention further relates to a system for optimizing neural network parameters that model the above-mentioned operational activities in a working environment.

The invention further relates to a method for generating control data of a device to be controlled.

In particular, but not limitedly, the present invention refers to the above-mentioned equipment, system, and method in the context of generating data representative of commands to be executed by a device in a working environment.

### BACKGROUND

Industrial production faces significant challenges in optimizing production workflows while maintaining the flexibility required to meet diverse customer needs. The main problems include frequent reconfiguration of production lines, high operational complexity, and the need to ensure consistent quality through unique product specifications.

In order to address these challenges, innovative solutions are required that allow efficient collaboration between humans and machines and adaptive production processes.

Currently, known devices are mainly interface elements, such as monitors and control bars, which allow to manually control and command the industrial device in a working environment.

However, some known devices also comprise a voice acquisition system capable of acquiring voice commands and subsequently processing them to execute the voice command itself.

To date, such processing consists of a simple comparison and search of already existing data contained within a database.

Typically, the database contains a plurality of known information, such as words representative of procedural steps for performing a specific work activity.

In other words, known devices are capable of comparing the acquired voice command with each known information contained in the database so as to verify the presence of the acquired command. In case of matching between the received voice command and the known information contained in the database, the device in the working environment executes the received command.

However, known solutions require the need to store a specific language by the user of the device.

In other words, known devices have a limited vocabulary and are therefore capable of interpreting only a limited number of voice commands.

The Applicant has identified the following technical drawbacks related to known devices for generating control data used by devices to be controlled in a working environment:
- complex use of control data generation devices;
- high downtime, due to the need to train the user on using the control data generation device, and in particular on the language interpretable thereby;
- high difficulty in using control data generation devices and high risk of generating operational failures, safety hazards, or regulatory non-compliance;
- ineffective and unreliable control data generation devices.

The Applicant has understood that by integrating generative artificial intelligence, devices for generating control data are capable of interpreting a greater number of words. Therefore, the devices for generating control data are capable of ensuring a better decision-making process and reduced downtime.

Furthermore, artificial intelligence-based recommendations support predictive maintenance and quality assurance, improving overall production efficiency and reducing waste.

The present invention describes an equipment capable of creating user interfaces that simplify the control of devices to be controlled in the working environment. In other words, the user can control and command industrial devices in the working environment to perform multiple activities using a simplified language toward the device to be controlled.

The object of the present invention is to provide an equipment capable of easily understanding commands issued by the user to drive the device to be controlled.

Another object of the present invention is to provide an equipment capable of processing the user's voice commands.

Another object of the present invention is to provide an equipment that is simple to use.

A further object of the present invention is to provide an equipment for processing control commands of an industrial device in the working environment from different inputs.

A further object of the present invention is to provide an equipment usable in different environments such as industrial environments, VR/AR, gaming, and productivity activities.

A further object of the present invention is to provide an equipment that minimizes resource consumption, ensures scalability, and reduces energy demand to make artificial intelligence systems more sustainable in the long term.

A further object of the present invention is to provide an equipment that ensures a reliable voice recognition over long distances, especially in open environments.

A further object of the present invention is to provide an equipment that allows real-time and efficient updating of artificial-intelligence models. Advantageously, artificial-intelligence models can be continuously trained and updated using data collected from loT sensors, voice inputs, gestures, and interactions with other devices.

### SUMMARY OF THE INVENTION

In a first aspect, the invention describes an equipment for generating control data of a device to be controlled for operational activities, as described in claim 1.

Advantageous aspects are described in dependent claims 2 to 12.

In a second aspect, the invention describes a system for optimizing neural network parameters, as described in claim 13.

In a third aspect, the invention describes a method for generating control data of a device to be controlled, as described in claim 14.

In a fourth aspect, the invention describes a system for executing operational functions, as described in claim 15.

The invention achieves the following technical effects:
- easy use of the equipment;
- easy interpretation of human language;
- reduced downtime;
- easy-to-use device, fewer operational failures, and increased safety control;
- more effective and reliable devices.

The mentioned technical effects/advantages and other technical effects/advantages of the invention will become more apparent from the description, made hereinbelow, of an exemplary embodiment, provided by way of indication and not limitation, with reference to the attached drawings.

### BRIEF DESCRIPTION OF THE DRAWINGS

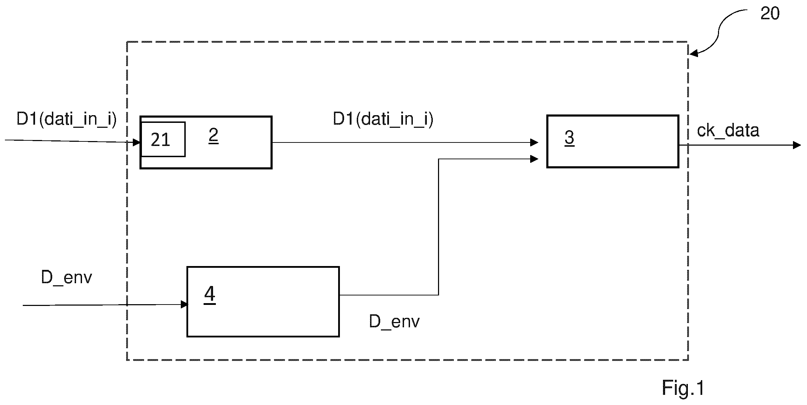

Figure 1 schematically shows the equipment for generating control data of a device to be controlled, according to the present invention.

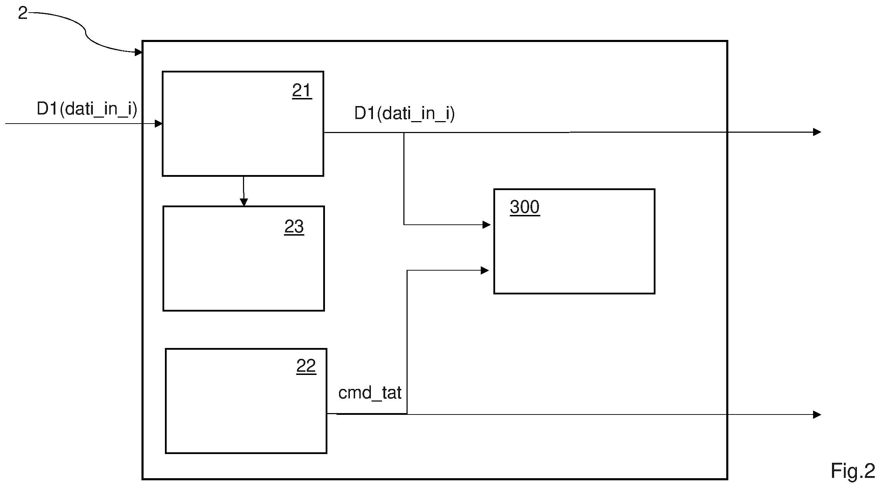

Figure 2 is a schematic view of a first detail of the equipment of Figure 1.

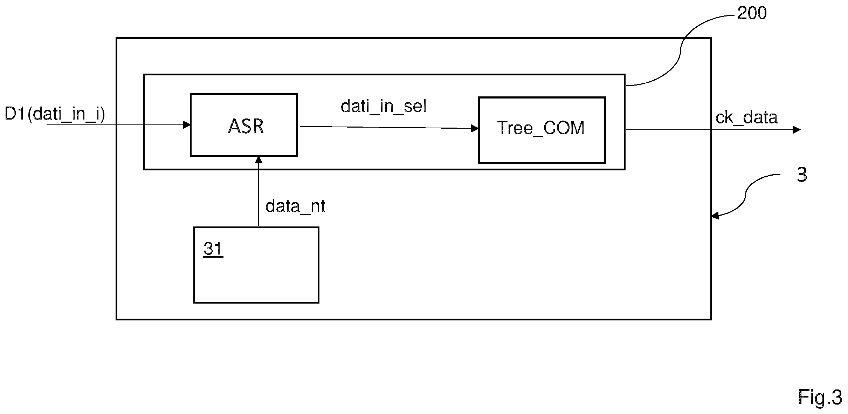

Figure 3 is a schematic view of a second detail of the equipment of Figure 1.

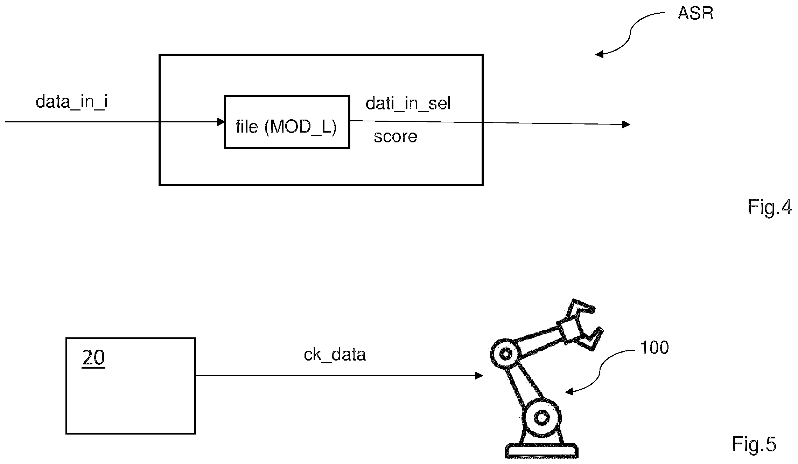

Figure 4 is a schematic view of an automatic speech recognition system intervening in the equipment of Figure 1.
Figure 5 is a schematic view of a system for executing operational functions.

### DETAILED DESCRIPTION

In a first aspect, the invention describes an equipment 20 for generating control data ck_data of a device to be controlled 100 for operational activities.

In particular, the equipment 20 comprises a wearable device 2, adaptable to a user's hand, and a docking station 3 couplable to the wearable device 2.

The wearable device 2 is configured to acquire audio data D1 representative of audio commands, by at least one audio receiver 21 provided at least on the wearable device 2, and to transmit the acquired audio data D1 to the docking station 3.

In detail, each audio data D1 comprises a plurality of input data dati_in_i. Preferably, the wearable device 2 further comprises an interface element 22 configured to select touch commands cmd_tat used to generate the control data ck_data. Therefore, touch commands cmd_tat are also transmitted to the docking station 3.

In an embodiment, the wearable device 2 has a touchpad 22 reachable by the fingers of the user's hand wearing the equipment 20. The touchpad 22 comprises at least one selection area, each associated with a touch command.

Advantageously, the user can generate control data ck_data, to control an external device, obtained from audio commands D1 and/or touch commands cmd_tat. In this way, the equipment 20 proves to be versatile also in different operational environments.

Advantageously, the wearable device 2 is simple to use and also allows non-expert users to interact more intuitively therewith, accelerating its adoption.

Preferably, the wearable device 2 further comprises a secondary processing unit 300, in particular for short-term processing.

In other words, the wearable device 2 can process the acquired audio data D1 and touch commands cmd_tat to verify their feasibility in real time. Short-term processing allows low-latency execution, which is typical for voice command recognition processing.

The wearable device 2 further comprises a short-term memory 23 used to store small-sized models used to process the acquired audio data D1 in real time. Advantageously, the equipment 20 verifies in real time the feasibility of the acquired audio data D1.

Furthermore, access to essential data, such as small-sized models, is fast and the response times of the equipment 20 are optimized.

The docking station 3 comprises a primary processing unit 200 and a memory 32 comprising a plurality of known data data_nt correlated with each other. In particular, the plurality of known data data_nt are representative of individual words of different languages.

Preferably, the primary processing unit 200 is configured to receive the audio data D1 acquired from the wearable device 2 and to generate at least the control data ck_data by an automatic speech recognition, ASR, system based on a recurrent neural network RNN, from the received audio data D1.

In particular, the recurrent neural network RNN is trained by a plurality of datasets comprising a plurality of training audio data representative of different accents and styles of various languages.

Advantageously, the equipment 20 adapts to any type of language and is easy to use for operators.

In particular, the generation of the control data ck_data is made by identifying a logically structured sequence of data dati_in_sel in the plurality of input data data_in_i and populating a data tree command structure Tree_COM with the plurality of identified data dati_in_sel. Preferably, identifying the logically structured sequence dati_in_sel in the plurality of input data data_in_i comprises the sub-steps of:
- identifying the plurality of input data data_in_i of each audio data D1, thereby identifying in the data the corresponding words also comprised in the plurality of known data data_nt;
- selecting/ordering the plurality of identified input data data_in_i by means of a scorer file sc_fl adapted to select/order the words based on grammar and frequency of use of the words, thereby identifying the logically structured/ordered sequence dati_in_sel.

In detail, the scorer file sc_fl comprises a language model MOD_L and a vocabulary, and is configured to:
- assign scores to the identified logically structured sequences dati_in_sel by the language model MOD_L;
- select the most probable transcription;
- provide a linguistic context to better interpret the identified logically structured sequences dati_in_sel.

Preferably, populating a tree structure Tree_COM comprises the sub-steps of:
- comparing a first input data dati_in_i, i=1, of the logically structured/ordered sequence dati_in_sel with the plurality of known data data_nt;
- populating, in case of matching, a tree structure Tree_COM, and in particular, the first node of the tree structure Tree_COM, with the first input data dati_in_i i=1;
- identifying the linguistic context of the first input data dati_in_i based on the corresponding scorer file sc_fl; and
- further populating the tree structure Tree_COM based on the identified context with input data dati_in_i, i=1, subsequent to the first input data dati_in_i.

Advantageously, by identifying the linguistic context, the equipment 20 allows a simplified command processing.

In order to further populate the structure, it is necessary to identify at least one contextual part of known data from the plurality of known data data_nt based on the identified context and the first input data dati_in_i, i=1, and to compare each input data dati_in_i subsequent to the first input data dati_in_i, i=1 with the known data of the contextual part.

Consequently, in case of matching following the comparison between each input data dati_in_i subsequent to the first input data dati_in_i, i=1 and the known data of the contextual part, each respective sub-level of the tree structure Tree_COM is populated.

Advantageously, identifying a contextual part allows to reduce the processing time of the equipment 20.

The equipment 20 further comprises at least one camera 4 configured to acquire environmental data D_env.

Therefore, the primary processing unit 200 of the docking station 3 is further configured to receive the environmental data D_env and to generate the control data ck_data also as a function of the received environmental data D_env.

In this way, the equipment 20 is capable of combining video, camera input, and voice recognition, offering a complete functionality of the control device by generating complete and reliable control data ck_data.

The docking device 3 is arranged to store the generated control data ck_data in memory 32.

Preferably, the control data ck_data comprise one or more of:
- position/movement data;
- selection data;
- ordering data;
- execution logic data.

In a second aspect, the present invention describes a system for optimizing neural network parameters comprising the equipment 20 as previously described.

In particular, the wearable device 2 of the equipment 20 is configured to acquire local data data_loc representative of input data of a labelled sub-model tag_Msi; said labelled sub-model tag_Msi is representative of parameters of a specialized neural sub-network comprised in a generative neural network GNN.

The generative neural network GNN is representative of a plurality of work activities, and the specialized neural sub-network is representative of the single work activity of the plurality for which the control data ck_data must be generated.

The local data data_loc comprising the audio data D1.

The control data ck_data, generated from the local data data_loc, are configured to train the labelled sub-model tag_Msi.

In a third aspect, the present invention describes a method for generating control data ck_data of a device comprising the steps of:
arranging a wearable device 2 adaptable to a user's hand, comprising at least one audio receiver 21;
arranging a docking station 3 couplable to the wearable device 2;
acquiring audio data D1 representative of audio commands of a user, by the at least one audio receiver 21, wherein each audio data D1 comprises a plurality of input data dati_in_i;
transmitting the acquired audio data D1 to the docking station 3; by means of the docking station 3
   receiving the audio data D1 acquired from the wearable device 2;
   generating at least the control data ck_data by an automatic speech recognition, ASR, system based on a recurrent neural network RNN, from the received audio data D1,
   wherein the generation of the control data ck_data is made by identifying a logically structured sequence dati_in_sel in the plurality of input data data_in_i and
populating a data tree command structure Tree_COM with the plurality of identified data dati_in_sel.

In a fourth aspect, the present invention describes a system for executing operational functions, in particular in the industrial field, comprising:
- an equipment 20 for generating control data ck_data for a device 100 to be controlled, as previously described;
- the device 100 to be controlled adapted to receive the control data ck_data to execute the operational functions.

From what has been described, the invention achieves the following technical effects:
- easy use of the equipment;
- easy interpretation of human language
- reduced downtime;
- easy-to-use device, fewer operational failures, and increased safety control;
- more effective and reliable devices.

## Claims

1. Equipment (20) for generating control data (ck_data) of a device to be controlled for operational activities, wherein the equipment (20) comprises a wearable device (2), adaptable to a hand of a user, and a docking station (3) couplable to the wearable device (2);
wherein the wearable device (2) is configured to:
acquire audio data (D1) representative of audio commands, by at least one audio receiver (21) arranged at least on said wearable device (2), wherein each audio data (D1) comprises a plurality of input data (dati_in_i);
transmit the acquired audio data (D1) to the docking station (3);
wherein the docking station (3) comprises a primary processing unit (200) configured to:
receive the audio data (D1) acquired from the wearable device (2);
generate at least the control data (ck_data) by an automatic speech recognition (ASR) system based on a recurrent neural network (RNN), from the received audio data (D1), wherein the generation of the control data (ck_data) is made by
identifying a logically structured sequence of data (dati_in_sel) in the plurality of input data (data_in_i), and
populating a data tree command structure (Tree_COM) with the plurality of identified data (dati_in_sel).

2. Equipment (20) according to claim 1, wherein the recurrent neural network (RNN) is trained by a plurality of datasets, comprising a plurality of training audio data representative of different accents and styles of various languages.

3. Equipment (20) according to any one of the preceding claims, wherein said docking station (3) comprises a memory (32) comprising a plurality of known data (data_nt) correlated with each other, wherein said plurality of known data (data_nt) is representative of individual words of the different languages.

4. Equipment (20) according to claim 3, wherein said identification of said logically structured sequence (dati_in_sel) in the plurality of input data (data_in_i) comprises the sub-steps of
identifying the plurality of input data (data_in_i) of each audio data (D1), thereby identifying in said data corresponding words also comprised in said plurality of known data (data_nt);
selecting/ordering the plurality of identified input data by means of a scorer file (sc_fl) adapted to select/order said words based on grammar and frequency of use of the words, thereby identifying said logically structured/ordered sequence (dati_in_sel)

5. Equipment (20) according to claim 4, wherein said scorer file (sc_fl) comprises a language model (MOD_L) and a vocabulary, and is configured to:
- assign scores to the identified logically structured sequences (dati_in_sel) by said language model (MOD_L);
- select a most probable transcription;
- provide a linguistic context to better interpret the identified logically structured sequences (dati_in_sel).

6. Equipment (20) according to claim 4 or 5, wherein said population of a structure comprises the sub-steps of
comparing a first input data of said logically structured/ordered sequence (dati_in_sel) with the plurality of known data (data_nt);
populating, in case of matching, the first node of the tree structure with said first input data;
identifying the linguistic context of said first input data based on the corresponding scorer file (sc_fl); and
further populating the tree structure (Tree_COM) based on the identified context with input data (dati_in_i) subsequent to said first input data.

7. Equipment (20) according to claim 6, wherein said sub-step of further populating the tree structure (Tree_COM) based on the identified context with input data (dati_in_i) subsequent to said first input data comprises:
identifying at least a contextual part of known data from said plurality of known data (data_nt) as a function of said identified context and said first input data;
comparing each input data subsequent to the first input data with the known data of said contextual part;
populating, in case of matching between each input data subsequent to the first input data and the known data of said contextual part, each respective sub-level of the tree structure (Tree_COM).

8. Equipment (20) according to any one of the preceding claims, further comprising at least one camera (4) configured to acquire environmental data (D_env);
wherein said primary processing unit (200) of the docking station (3) is further configured to receive the environmental data (D_env); and
said step of generating the control data (ck_data) is also performed as a function of said received environmental data (D_env).

9. Equipment (20) according to any one of claims 4 to 10, wherein said docking device (3) is arranged to store said generated control data (ck_data) in said memory (32).

10. Equipment (20) according to any one of the preceding claims, wherein said wearable device (2) further comprises
an interface element (22) provided to select touch commands to generate said control data (ck_data).

11. Equipment (20) according to any one of the preceding claims, wherein said wearable device (2) further comprises a secondary processing unit (300), in particular for short-term processing.

12. Equipment (20) according to any one of the preceding claims, wherein said control data (ck_data) comprise one or more of:
- position/movement data;
- selection data;
- ordering data;
- execution logic data.

13. System for optimizing neural network parameters comprising said equipment (20) according to any one of claims 1 to 12,
wherein said wearable device (2) is configured to acquire local data (data_loc) representative of input data of a labelled sub-model (tag_Msi) representative of parameters of a specialized neural sub-network comprised in a generative neural network (GNN),
• wherein said generative neural network (GNN) is representative of a plurality of work activities, and
• said specialized neural sub-network is representative of said single work activity of the plurality, for which said control data (ck_data) must be generated;
wherein said local data (data_loc) comprising said audio data (D1); wherein said control data (ck_data), generated from said local data (data_loc), are configured to train said labelled sub-model (tag_Msi).

14. Method for generating control data of a device, comprising the steps of:
arranging a wearable device (2) adaptable to a hand of a user, comprising at least one audio receiver (21);
arranging a docking station (3) couplable to the wearable device (2);
acquiring audio data (D1) representative of audio commands of a user, by the at least one audio receiver (21), wherein each audio data (D1) comprises a plurality of input data (dati_in_i);
transmitting the acquired audio data (D1) to the docking station (3);
by means of the docking station (3)
receiving the audio data (D1) acquired from the wearable device (2);
generating at least the control data (ck_data) by an automatic speech recognition (ASR) system based on a recurrent neural network (RNN), from the received audio data (D1),
wherein the generation of the control data (ck_data) is made by identifying a logically structured sequence (dati_in_sel) of data in the plurality of input data (data_in_i)
and
populating a data tree command structure (Tree_COM) with the plurality of identified data (dati_in_sel).

15. System for executing operational functions comprising:
- an equipment (20) for generating control data (ck_data) for a device (100) to be controlled, according to any one of claims 1 to 12;
- the device (100) to be controlled adapted to receive said control data (ck_data) to execute said operational functions.
